# EUROPÄISCHE PATENTSCHRIFT

(11) **EP 4 363 254 B1**
(45) Veröffentlichungstag und Bekanntmachung des Hinweises auf die Patenterteilung: **14.05.2025**
(21) Anmeldenummer: 22734622.8
(22) Anmeldetag: 23.06.2022
(51) Int. Cl.: B60K 35/23, G02B 27/01, F16B 13/12

(54) **KOPF-OBEN-ANZEIGEVORRICHTUNG FÜR EIN KRAFTFAHRZEUG UND VERFAHREN ZUM FERTIGEN EINER KOPF-OBEN-ANZEIGEVORRICHTUNG**
HEAD-UP DISPLAY DEVICE FOR A MOTOR VEHICLE AND METHOD FOR PRODUCING A HEAD-UP DISPLAY DEVICE
DISPOSITIF D'AFFICHAGE TÊTE HAUTE POUR VÉHICULE À MOTEUR ET PROCÉDÉ DE PRODUCTION D'UN DISPOSITIF D'AFFICHAGE TÊTE HAUTE

(30) Priorität: 01.07.2021 DE 102021117006
(43) Veröffentlichungstag der Anmeldung: 08.05.2024
(73) Patentinhaber: Valeo Schalter und Sensoren GmbH, 74321 Bietigheim-Bissingen (DE)
(72) Erfinder: SIMONIS, Karl, 74321 Bietigheim-Bissingen (DE); SALMANOGLU, Oezguer, 74321 Bietigheim-Bissingen (DE); DILAVER, Fatih, 74321 Bietigheim-Bissingen (DE); KUNTZE, Daniel, 74321 Bietigheim-Bissingen (DE)
(74) Vertreter: Ralf, Thorge
(86) Internationale Anmeldenummer: PCT/EP2022/067145
(87) Internationale Veröffentlichungsnummer: WO 2023/274827

(56) Entgegenhaltungen:
- EP-A1- 3 686 650
- DE-A1- 102016 122 419
- DE-A1- 102018 114 903
- DE-A1- 102018 120 926
- US-A1- 2019 146 218

## Beschreibung

Die Erfindung betrifft eine Kopf-Oben-Anzeigevorrichtung für ein Kraftfahrzeug, mit einem Gehäuseteil, in welchem eine Bilderzeugungseinheit der Anzeigevorrichtung angeordnet ist. Die Bilderzeugungseinheit ist zum Projizieren eines Bilds auf eine lichtdurchlässige Projektionsfläche ausgebildet. Ein Deckelelement ist mit dem Gehäuseteil verbunden, wobei das Deckelelement das Gehäuseteil zu einer Umgebung der Anzeigevorrichtung hin bereichsweise abdeckt. Das Deckelelement weist ein Zapfenelement auf, welches in eine korrespondierende, in dem Gehäuseteil ausgebildete Aufnahme eingebracht ist. Des Weiteren betrifft die Erfindung ein Verfahren zum Fertigen einer solchen Kopf-Oben-Anzeigevorrichtung.

Die DE 10 2007 010 381 B4 beschreibt ein Head-up-Display für ein Kraftfahrzeug zur Montage im Bereich eines Armaturenbretts des Kraftfahrzeugs. Das Head-up-Display umfasst ein erstes, unteres Gehäuseteil und ein zweites, oberes Gehäuseteil. In dem unteren Gehäuseteil sind eine Spiegeloptik mit zwei Spiegeln und eine Steuerelektronik angeordnet. An dem oberen Gehäuseteil ist eine Abdeckscheibe angeordnet, welche das Head-up-Display nach oben hin abschließt, und welche unter anderem dazu dient, das Display vor Staub zu schützen. Die beiden Gehäuseteile sind lösbar miteinander verbunden, wozu Befestigungsmittel vorgesehen sind. Die Befestigungsmittel können Rastzapfen an einem Gehäuseteil umfassen, welche in entsprechende Rastaufnahmen an dem anderen Gehäuseteil eingreifen.

DE 10 2018 120926 A1 beschreibt ein Head-up-Display für ein Kraftfahrzeug, das eine Deckeleinrichtung und eine Gehäuseeinrichtung umfasst. Dabei sind die Deckeleinrichtung und die Gehäuseeinrichtung mittels einer Verbindungseinrichtung verbunden. Die Verbindungseinrichtung weist ein Hülsenelement auf, welches zwischen einem Befestigungselement und einem Dämpfungselement, welches zum Dämpfung der Schwingung dient, angeordnet ist.

Aufgabe der vorliegenden Erfindung ist es, eine Kopf-Oben-Anzeigevorrichtung der eingangs genannten Art zu schaffen, bei welcher eine besonders sichere Positionierung des Deckelelements an dem Gehäuseteil erreicht ist, und ein Verfahren zum Fertigen einer solchen Kopf-Oben-Anzeigevorrichtung anzugeben.

Diese Aufgabe wird durch eine Kopf-Oben-Anzeigevorrichtung mit den Merkmalen des Patentanspruchs 1 und durch ein Verfahren mit den Merkmalen des Patentanspruchs 12 gelöst. Vorteilhafte Ausgestaltungen mit zweckmäßigen Weiterbildungen der Erfindung sind in den abhängigen Patentansprüchen und in der nachfolgenden Beschreibung angegeben.

Die erfindungsgemäße Kopf-Oben-Anzeigevorrichtung für ein Kraftfahrzeug umfasst ein Gehäuseteil, in welchem eine Bilderzeugungseinheit der Anzeigevorrichtung angeordnet ist. Die Bilderzeugungseinheit ist zum Projizieren eines Bilds auf eine lichtdurchlässige Projektionsfläche ausgebildet. Die Anzeigevorrichtung umfasst ein Deckelelement, welches mit dem Gehäuseteil verbunden ist. Das Deckelelement deckt das Gehäuseteil zu einer Umgebung der Anzeigevorrichtung hin bereichsweise ab. Das Deckelelement weist ein Zapfenelement auf, welches in eine korrespondierende, in dem Gehäuseteil ausgebildete Aufnahme eingebracht ist. Das Zapfenelement ist mittels eines in das Zapfenelement eingebrachten Spreizkörpers aufgeweitet, wobei das Zapfenelement aufgrund des Aufweitens in der Aufnahme fixiert ist.

Beim Fertigen der Anzeigevorrichtung beziehungsweise bei der Montage der Anzeigevorrichtung oder Kopf-Oben-Anzeigevorrichtung kann somit das Zapfenelement zunächst mit ausreichend Spiel und folglich sehr einfach in die Aufnahme eingeführt werden. Durch das anschließende Einbringen des Spreizkörpers in das nach Art eines Spreizdübels ausgebildete Zapfenelement kommt es dann zu dem Aufweiten des Zapfenelements. Mit anderen Worten wird das Zapfenelement mittels des Spreizkörpers derart geweitet oder aufgespreizt, wie dies infolge eines Einschraubens einer Schraube in einen Dübel der Fall ist. Dieses Aufweiten des Zapfenelements beziehungsweise dieses Auseinanderspreizen von wenigstens zwei Teilbereichen des Zapfenelements sorgt wiederum für die feste und belastbare Fixierung des Zapfenelements in der Aufnahme. Das in der Aufnahme fixierte Zapfenelement ist daher gegen ein Sich-Lösen beziehungsweise gegen ein Herausbewegen aus der Aufnahme gesichert. Folglich ist das Deckelelement sehr sicher und präzise an dem Gehäuseteil positioniert.

Dies ist insbesondere im Hinblick darauf vorteilhaft, dass auf diese Weise eine gegenüber Staub und/oder Tropfwasser dichte Abdeckung des Gehäuseteils mittels des Deckelelements erreicht werden kann. Zudem lässt sich eine derartige Verbindung des Deckelelements mit dem Gehäuseteil, bei welcher der Spreizkörper in das Zapfenelement eingebracht wird, technisch sehr aufwandsarm und zugleich prozesssicher realisieren.

Das insbesondere wie eine dübelartige Ausprägung des Deckelelements ausgebildete Zapfenelement fungiert somit vorzugsweise einerseits als aufspreizbarer beziehungsweise aufweitbarer Dübel und zugleich auch als Zentrierzapfen beziehungsweise Positionierzapfen. Dies ist im Hinblick auf die präzise Positionierung des Deckelelements an dem Gehäuseteil vorteilhaft.

Die mittels des aufgeweiteten oder aufgespreizten Zapfenelements erreichte Positionierung und Fixierung des Deckelelements an dem Gehäuseteil lässt sich zudem sehr kostengünstig realisieren. Denn sowohl der Spreizkörper als auch das Zapfenelement selber lassen sich sehr kostengünstig bereitstellen beziehungsweise herstellen.

Bei der als Head-up-Display (also "Kopf-Oben-Anzeige") ausgebildeten Kopf-Oben-Anzeigevorrichtung, welche der Einfachheit halber vorliegend synonym auch lediglich als Anzeigevorrichtung bezeichnet wird, kann die Bilderzeugungseinheit im Betrieb das Bild auf eine lichtdurchlässige Projektionsfläche in Form einer Frontscheibe des Kraftfahrzeugs projizieren. Des Weiteren ist es möglich, mittels der Bilderzeugungseinheit beziehungsweise Bildausgabeeinrichtung der Anzeigevorrichtung das Bild auf eine als sogenannter Combiner ausgebildete, lichtdurchlässige und das Bild reflektierende Scheibe zu projizieren, welche als von der Frontscheibe oder Windschutzscheibe des Kraftfahrzeugs separates Bauteil ausgebildet ist.

Zum Fixieren des Zapfenelements in der Aufnahme kann das mittels des Spreizkörpers aufgeweitete beziehungsweise aufgespreizte Zapfenelement mit dem Gehäuseteil im Bereich der Aufnahme einen Formschluss ausbilden. Hierfür kann vorgesehen sein, dass wenigstens ein vorspringender Bereich des aufgeweiteten Zapfenelements einen Materialbereich des Gehäuseteils hintergreift, in welchem die Aufnahme ausgebildet ist.

Vorzugsweise ist das Zapfenelement aufgrund des Aufweitens mit einer die Aufnahme begrenzenden Wandung verspannt. Hierbei ist zwischen der die Aufnahme begrenzenden, durch das Gehäuseteil bereitgestellten Wandung und einer Außenseite des Zapfenelements eine kraftschlüssige Verbindung hergestellt, welche aus dem Anpressen des Zapfenelements an die Wandung resultiert. So lässt sich eine besonders sichere und präzise, insbesondere spielfreie, und außerdem sehr prozesssichere Fixierung des Zapfenelements in der Aufnahme erreichen. Auf diese Weise können außerdem Fertigungstoleranzen auf Seiten des Zapfenelements und/oder auf Seiten der Aufnahme gut und einfach kompensiert werden.

Insbesondere bei einer infolge des Aufweitens zumindest weitgehend spielfreien Fixierung des Zapfenelements in der Aufnahme lässt sich zudem eine sehr gute Zentrierung des Zapfenelements in der Aufnahme erreichen.

Besonders einfach lässt sich die Aufnahme in dem Gehäuseteil bereitstellen, wenn die Aufnahme als Bohrung ausgebildet ist. Insbesondere kann eine solche Bohrung als Durchtrittsöffnung in einem entsprechenden Teilbereich oder Materialbereich des Gehäuseteils ausgebildet sein.

Vorzugsweise ist das Deckelelement mittels wenigstens eines weiteren, von dem Zapfenelement verschiedenen Befestigungsmittels mit dem Gehäuseteil verbunden. Auf diese Weise ist für eine besonders sichere Verbindung des Deckelelements mit dem Gehäuseteil gesorgt.

Das wenigstens eine Befestigungsmittel kann durch eine in dem Gehäuseteil ausgebildete Durchtrittsöffnung hindurchgeführt und an einem weiteren Bauteil der Anzeigevorrichtung festgelegt sein. Dann ist wie bei einer Sandwichbauweise das als Abdeckung dienende Deckelelement durch das Gehäuseteil hindurch mit dem weiteren Bauteil verbunden. Dies sorgt wiederum in vorteilhafter Weise für eine sehr präzise Positionierung auch des weiteren Bauteils der Anzeigevorrichtung, insbesondere bezogen auf das Gehäuseteil.

Vorzugsweise weist das weitere Bauteil wenigstens einen Befestigungsdom auf, in welchen das weitere Befestigungsmittel eingebracht ist. Mittels des wenigstens einen Befestigungsdoms lässt sich zum einen eine präzise Positionierung des weiteren Bauteils an dem Gehäuseteil erreichen. Zum anderen ist durch den Befestigungsdom in vorteilhafter Weise ein Materialbereich des weiteren Bauteils bereitgestellt, in welchen das weitere Befestigungsmittel einfach eingebracht werden kann.

Vorzugsweise ist das weitere Bauteil aus einem anderen Werkstoff gebildet als das Gehäuseteil. Auf diese Weise kann im Hinblick auf die Materialbeschaffenheit den jeweils an das weitere Bauteil und an das Gehäuseteil gestellten Anforderungen gut Rechnung getragen werden.

Beispielsweise kann das weitere Bauteil vorteilhaft aus einem kostengünstigen Kunststoff gebildet sein. Demgegenüber kann das Gehäuseteil aus Metall gebildet sein. Dadurch ist dem Gehäuseteil eine hohe Robustheit verliehen. Dies ist insbesondere im Hinblick auf eine Anbringung einer vorzugsweise vorgesehenen und zum Ansteuern der Bilderzeugungseinheit ausgebildeten Steuerungseinrichtung der Kopf-Oben-Anzeigevorrichtung an dem Gehäuseteil und/oder im Hinblick auf eine geschützte Unterbringung der Bilderzeugungseinheit in dem Gehäuseteil vorteilhaft.

Insbesondere bei Ausbildung des Gehäuseteils als aus Metall gebildetem Druckgussteil sind die genannten Vorteile in besonderem Maße gegeben. Des Weiteren ist auf diese Weise eine besonders präzise Fertigung des Gehäuseteils erreicht.

Vorzugsweise ist das weitere Bauteil als Abschirmeinrichtung ausgebildet, mittels welcher eine Beaufschlagung wenigstens einer Komponente der Bilderzeugungseinheit mit Streulicht zumindest verringerbar ist. Auf diese Weise kann durch das weitere Bauteil nicht nur die Verbindung oder Kopplung des Deckelelements mit dem Gehäuseteil erreicht werden. Vielmehr sorgt das weitere Bauteil in vorteilhafter Weise auch dafür, dass ein Ausgeben von Bildern mittels der Bilderzeugungseinheit oder Bildausgabeeinrichtung möglichst wenig beeinträchtigt ist.

Denn das als Abschirmeinrichtung ausgebildete weitere Bauteil kann einerseits einen Einfall von Streulicht in Form von Sonnenlicht beziehungsweise Umgebungslicht auf Komponenten der Bilderzeugungseinheit zumindest verringern beziehungsweise so weit wie möglich unterbinden.

Des Weiteren kann die Abschirmeinrichtung eine unerwünschte Reflexion von Licht, welches zum Projizieren des Bilds auf die lichtdurchlässige Projektionsflächen genutzt wird, im Inneren der Abschirmeinrichtung sehr weitgehend unterbinden. Auch dies ist vorteilhaft.

Beispielsweise kann die Abschirmeinrichtung an ihrer den entsprechenden Komponenten der Bilderzeugungseinheit zugewandten Seite mit einer eine Reflexion von Licht möglichst weitgehend unterbindenden Beschichtung oder dergleichen versehen sein. Dementsprechend kann eine solche Beschichtung der Abschirmeinrichtung beispielsweise matt beziehungsweise nicht spiegelnd ausgebildet sein.

Vorzugsweise ist der Spreizkörper als Schraube ausgebildet. So kann durch ein zunehmend weiter voranschreitendes Eindrehen des Spreizkörpers in das Zapfenelement ein sehr gut dosierbares Aufweiten des Zapfenelements in der Aufnahme bewirkt werden. Des Weiteren lässt sich ein als Schraube ausgebildeter Spreizkörper prozesstechnisch sehr einfach handhaben, nämlich mittels eines Schraubwerkzeugs.

Als weiter vorteilhaft hat es sich gezeigt, wenn das wenigstens eine weitere Befestigungselement als Schraube ausgebildet ist. Denn so kann mittels des Schraubwerkzeugs sowohl das Einbringen des Spreizkörpers in das Zapfenelement als auch ein Einschrauben des wenigstens einen weiteren Befestigungsmittels durchgeführt werden. Dies ist im Hinblick auf eine aufwandsarme und einfache Montage beziehungsweise Fertigung der Anzeigevorrichtung vorteilhaft.

Vorzugsweise ist die den Spreizkörper und/oder das wenigstens eine weitere Befestigungsmittel bereitstellende Schraube aus einem Kunststoff gebildet. Derartige Schrauben sind besonders kostengünstig im Vergleich zu etwa aus Metall gefertigten Schrauben.

Von Vorteil ist es weiterhin, wenn die aus Kunststoff gebildeten Schrauben als selbstschneidende Schrauben ausgebildet sind. Denn dann braucht an dem jeweiligen Gegenpart, in welchen die selbstschneidende Kunststoffschraube eingebracht wird, nicht in aufwändiger Art und Weise ein präzise zu fertigendes Gewinde bereitgestellt zu werden. Vielmehr furcht sich die selbstschneidende Schraube beim Einbringen in den jeweiligen Gegenpart ihr Gewinde selber. Auch dies ist im Hinblick auf einen geringen Aufwand bei der Fertigung oder Montage der Anzeigevorrichtung vorteilhaft.

Es ist vorteilhaft, wenn sowohl für den Spreizkörper als auch für das wenigstens eine weitere Befestigungsmittel gleichartig ausgebildete Schrauben, insbesondere gleichartig ausgebildete selbstschneidende Kunststoffschrauben, zum Einsatz kommen. Denn dann braucht nicht darauf geachtet zu werden, welche dieser Schrauben als Spreizkörper zum Aufweiten des Zapfenelements verwendet werden soll, und welche dieser Schrauben als das wenigstens eine weitere Befestigungsmittel zum Einsatz kommen soll. Auch dies ist im Hinblick auf eine einfache und rasche Montage beziehungsweise Fertigung der Anzeigevorrichtung vorteilhaft.

Insbesondere die Verwendung von selbstschneidenden Kunststoffschrauben sowohl für den Spreizkörper als auch für das wenigstens eine weitere Befestigungsmittel ist im Hinblick auf eine prozesssichere Verarbeitung und im Hinblick auf die Kosten vorteilhaft.

Vorzugsweise sind das Zapfenelement und das wenigstens eine weitere Befestigungsmittel in jeweiligen Eckbereichen des Deckelelements angeordnet. Auf diese Weise sind sowohl das Zapfenelement als auch die weiteren Befestigungsmittel gut zugänglich.

Als weiter vorteilhaft hat es sich gezeigt, wenn das Zapfenelement einstückig mit einem Grundkörper des Deckelelements ausgebildet ist. So lässt sich das Zapfenelement besonders aufwandsarm bereitstellen. Beispielsweise kann das Deckelelement aus einem Kunststoff gefertigt sein und das aus diesem Kunststoff gebildete Zapfenelement aufweisen.

Vorzugsweise ist in einer Seitenwand des Deckelelements eine Aussparung ausgebildet, über welche eine elektrische Anschlusseinrichtung der Anzeigevorrichtung von der Umgebung der Anzeigevorrichtung her zugänglich ist. Auf diese Weise lässt sich eine Versorgung von Komponenten der Anzeigevorrichtung, insbesondere einer zum Ansteuern der Bilderzeugungseinheit ausgebildeten Steuerungseinrichtung der Anzeigevorrichtung und/oder der Bilderzeugungseinheit, mit elektrischer Energie einfach realisieren, etwa durch Einstecken eines Anschlusssteckers oder dergleichen Steckerelements in die elektrische Anschlusseinrichtung der Anzeigevorrichtung.

Zudem ist durch die in dem Deckelelement ausgebildete Aussparung eine Verdrehsicherung für das Anbringen des Deckelelements an dem Gehäuseteil bereitgestellt. Insbesondere im Zusammenwirken mit dem in die Aufnahme einzubringenden Zapfenelement lässt sich somit eine sehr präzise Ausrichtung des Deckelelements an dem Gehäuseteil bei der Fertigung beziehungsweise Montage der Anzeigevorrichtung realisieren.

Vorzugsweise ist die Seitenwand im Bereich der Aussparung gegenüber der elektrischen Anschlusseinrichtung mittels eines Dichtelements abgedichtet. Auf diese Weise ist sichergestellt, dass trotz des Vorsehens der Aussparung in dem Deckelelement keine Verunreinigungen etwa in Form von Staub und/oder Wasser, insbesondere von Tropfwasser, über die Aussparung in das Gehäuseteil gelangen können.

Vorzugsweise weist die Seitenwand im Bereich der Aussparung eine Haltenut auf, welche das Dichtelement bereichsweise umgreift. So ist auch eine präzise Positionierung des Dichtelements sichergestellt.

Insbesondere kann das Dichtelement aus einem elastischen Schaummaterial gebildet sein. Mittels eines derartigen, die elektrische Anschlusseinrichtung bereichsweise umgreifenden beziehungsweise um die elektrische Anschlusseinrichtung bereichsweise umlaufenden Schaumkragens lässt sich auf sehr einfache und zugleich wirkungsvolle Art und Weise eine Abdichtung eines Innenraums der Anzeigevorrichtung gegenüber der Umgebung der Anzeigevorrichtung sicherstellen.

Bei dem erfindungsgemäßen Verfahren zum Fertigen einer Kopf-Oben-Anzeigevorrichtung für ein Kraftfahrzeug wird ein Gehäuseteil der Anzeigevorrichtung mit einem Deckelelement der Anzeigevorrichtung verbunden. In dem Gehäuseteil ist eine Bilderzeugungseinheit der Anzeigevorrichtung angeordnet. Die Bilderzeugungseinheit ist zum Projizieren eines Bilds auf eine lichtdurchlässige Projektionsfläche ausgebildet. Das Deckelelement deckt das Gehäuseteil zu einer Umgebung der Anzeigevorrichtung hin bereichsweise ab und weist ein Zapfenelement auf. Das Zapfenelement wird in eine korrespondierende, in dem Gehäuseteil ausgebildete Aufnahme eingebracht. Dann wird das Zapfenelement mittels eines in das Zapfenelement eingebrachten Spreizkörpers aufgeweitet, wobei das Zapfenelement aufgrund des Aufweitens in der Aufnahme fixiert wird.

Durch das Fixieren des Zapfenelements in der Aufnahme ist dafür gesorgt, dass das Zapfenelement lagegesichert in der Aufnahme gehalten ist. Dementsprechend ist eine besonders sichere und präzise Positionierung des Deckelelements an dem Gehäuseteil erreicht.

Die für die erfindungsgemäße Anzeigevorrichtung beschriebenen Vorteile und bevorzugten Ausführungsformen gelten auch für das erfindungsgemäße Verfahren und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Weitere Merkmale der Erfindung ergeben sich aus den Ansprüchen, den Figuren und der Figurenbeschreibung. Dabei zeigen:
- Fig. 1: eine Perspektivansicht einer als Head-up-Display ausgebildeten Anzeigevorrichtung für ein Kraftfahrzeug, wobei die Anzeigevorrichtung in ihrer Einbauposition in dem Kraftfahrzeug gezeigt ist;
- Fig. 2: eine weitere Perspektivansicht der Anzeigevorrichtung gemäß Fig. 1, wobei ein an einer Unterseite der Anzeigevorrichtung angebrachtes Deckelelement umfänglicher als in Fig. 1 zu sehen ist;
- Fig. 3: eine Explosionsdarstellung von Komponenten der Anzeigevorrichtung beziehungsweise des Head-up-Displays in der Perspektive gemäß Fig. 2;
- Fig. 4: in einer vergrößerten Perspektivansicht eine weitere Explosionsdarstellung von einzelnen Komponenten der Anzeigevorrichtung;
- Fig. 5: in einer vergrößerten Detailansicht einen Ausschnitt eines als Druckgussgehäuse ausgebildeten Gehäuseteils der Anzeigevorrichtung;
- Fig. 6: das Deckelelement der Anzeigevorrichtung in einer perspektivischen Ansicht auf eine Innenseite, wobei die Innenseite im montierten Zustand des Deckelelements (vergleiche Fig. 2) dem Druckgussgehäuse zugewandt ist;
- Fig. 7: eine weitere Perspektivansicht der Anzeigevorrichtung;
- Fig. 8: eine teilweise geschnittene Ansicht der Anzeigevorrichtung, wobei das Deckelelement an dem Druckgussgehäuse festgelegt ist; und
- Fig. 9: eine vergrößerte Detaildarstellung eines nach Art eines Schaumkragens ausgebildeten Dichtelements, mittels welchem eine elektrische Anschlusseinrichtung der Anzeigevorrichtung abgedichtet ist.

In den Figuren sind gleiche oder funktionsgleiche Elemente mit identischen Bezugszeichen versehen.

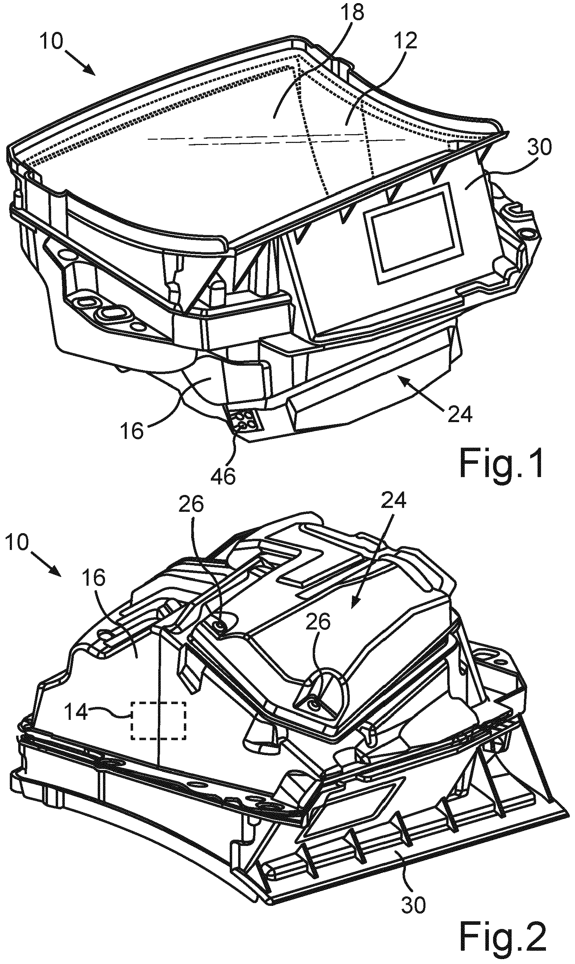

Fig. 1 zeigt perspektivisch eine als Head-up-Display (und somit als "Kopf-Oben-Anzeige") ausgebildete Anzeigevorrichtung 10 für ein Kraftfahrzeug, welche vorliegend entweder als Kopf-Oben-Anzeigevorrichtung 10 oder (aus Gründen der Einfachheit) auch lediglich als Anzeigevorrichtung 10 bezeichnet wird. Die Anzeigevorrichtung 10 ist in Fig. 1 in ihrer Einbaulage in dem Kraftfahrzeug gezeigt. Dementsprechend kann durch eine oberseitige, transparente Abdeckung 12 hindurch, welche etwa als transparente Folie oder dergleichen ausgebildet sein kann, ein Bild auf eine (nicht gezeigte) Frontscheibe oder Windschutzscheibe des Kraftfahrzeugs projiziert werden. Die Inhalte des Bilds sind somit für einen durch die Frontscheibe blickenden Fahrer des Kraftfahrzeugs in dessen Sichtfeld sichtbar.

Eine zum Bereitstellen und Projizieren des Bilds ausgebildete Bilderzeugungseinheit 14 der Anzeigevorrichtung 10 ist in Fig. 2 schematisch angegeben, wobei die Bilderzeugungseinheit 14 weder im Hinblick auf ihre Anordnung in einem vorliegend als Druckgussgehäuse ausgebildeten Gehäuseteil 16 der Anzeigevorrichtung noch im Hinblick auf die zugehörigen Komponenten realistisch dargestellt ist. Etwa in Fig. 1 ist jedoch beispielsweise ein Spiegel 18 der Bilderzeugungseinheit 14 zu erkennen. Über diesen Spiegel 18 wird das Bild durch die transparente Abdeckung 12 hindurch auf die (nicht gezeigte) Windschutzscheibe oder Frontscheibe des Kraftfahrzeugs projiziert.

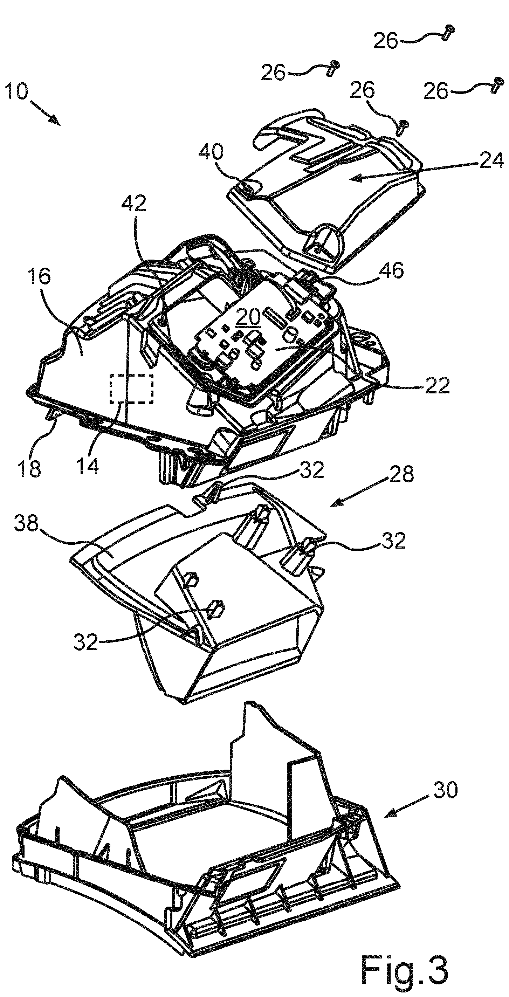

Eine Steuerungseinrichtung 20 (vergleiche Fig. 3) zum Ansteuern der Bilderzeugungseinheit 14 ist durch vorliegend nicht näher spezifizierte elektronische Bauteile bereitgestellt, welche bei der in den Figuren gezeigten Ausgestaltung der Anzeigevorrichtung 10 auf einer Leiterplatte 22 angeordnet sind. Die Leiterplatte 22 (und somit auch die Steuerungseinrichtung 20) ist an dem vorliegend als metallisches Druckgussgehäuse ausgebildeten Gehäuseteil 16 angeordnet beziehungsweise gehalten (vergleiche Fig. 3).

Um die auf der Leiterplatte 22 angeordneten elektronischen Bauteile vor einer Beaufschlagung mit Staub und Tropfwasser zu schützen, ist an dem als das Druckgussgehäuse ausgebildeten Gehäuseteil 16 ein Deckelelement 24 angebracht. Wie diesbezüglich insbesondere aus Fig. 1 in Verbindung mit Fig. 2 hervorgeht, deckt das Deckelelement 24 das Gehäuseteil 16 in der Einbaulage der Anzeigevorrichtung 10 (vergleiche Fig. 1) unterseitig zu einer Umgebung der Anzeigevorrichtung 10 hin bereichsweise ab.

Die Art der Festlegung des Deckelelements 24 oder Deckels an dem Gehäuseteil 16 vorliegend in Form des metallischen Druckgussgehäuses soll nachstehend näher erläutert werden.

Vorliegend sind nämlich zum Verbinden des Deckelelements 24 mit dem Gehäuseteil 16 eine Mehrzahl von Schrauben 26 (vergleiche Fig. 3) vorgesehen, welche vorzugsweise als selbstschneidende Kunststoffschrauben ausgebildet sind. Ein Teil der Schrauben 26 ist durch das Deckelelement 24 und das Gehäuseteil 16 hindurch in ein weiteres Bauteil 28 eingeschraubt, welches in der Explosionsdarstellung in Fig. 3 perspektivisch gezeigt ist. Dieses weitere Bauteil 28 ist vorliegend als optische Kammer beziehungsweise Abschirmeinrichtung ausgebildet, deren Aufgabe es insbesondere ist, einen Einfall von störendem Streulicht auf Komponenten der Bilderzeugungseinheit 14 möglichst weitgehend zu verhindern.

In der in Fig. 1 und Fig. 2 gezeigten Perspektivansicht der Anzeigevorrichtung 10 ist dieses weitere Bauteil 28 teilweise durch das (in Fig. 1 untere) Gehäuseteil 16 und teilweise durch ein in Fig. 1 oberes Gehäuseteil 30 der Anzeigevorrichtung 10 verdeckt, wobei an dem oberen Gehäuseteil 30 die transparente Abdeckung 12 angeordnet ist (vergleiche Fig. 1).

Nicht nur das Deckelelement 24, sondern auch das obere Gehäuseteil 30 ist mit dem vorliegend als Druckgussgehäuse ausgebildeten Gehäuseteil 16 verbunden. Insbesondere kann das obere Gehäuseteil 30 mit dem Druckgussgehäuse verschraubt oder auf andere geeignete Art und Weise an dem Druckgussgehäuse festgelegt sein, wobei die Art der Festlegung vorliegend nicht näher erläutert zu werden braucht.

Gemäß dem insbesondere aus Fig. 3 ersichtlichen Aufbau der Anzeigevorrichtung 10 ist das als Druckgussgehäuse ausgebildete Gehäuseteil 16 sandwichartig zwischen dem weiteren Bauteil 28 in Form der optischen Kammer und dem Deckelelement 24 angeordnet.

Das weitere Bauteil 28 ist vorliegend aus Kunststoff gebildet. Außerdem sind an dem weiteren Bauteil 28 Befestigungsdome 32 ausgebildet, wobei bei der in Fig. 3 beispielhaft gezeigten Ausgestaltung der Anzeigevorrichtung 10 durch das weitere Bauteil 28 drei derartige Befestigungsdome 32 bereitgestellt sind. In diese Befestigungsdome 32 werden drei der ebenfalls in Fig. 3 gezeigten Schrauben 26 eingebracht, wenn die Schrauben 26 das als Abdeckung dienende Deckelelement 24 durch das Gehäuseteil 16 hindurch mit dem darunterliegenden Kunststoffteil in Form des weiteren Bauteils 28 verbinden (vergleiche Fig. 2).

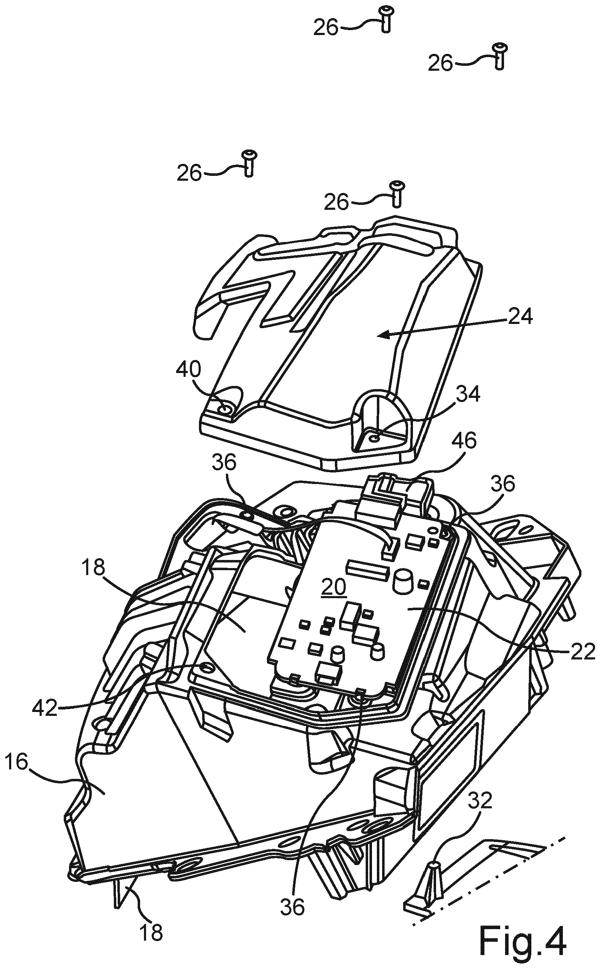

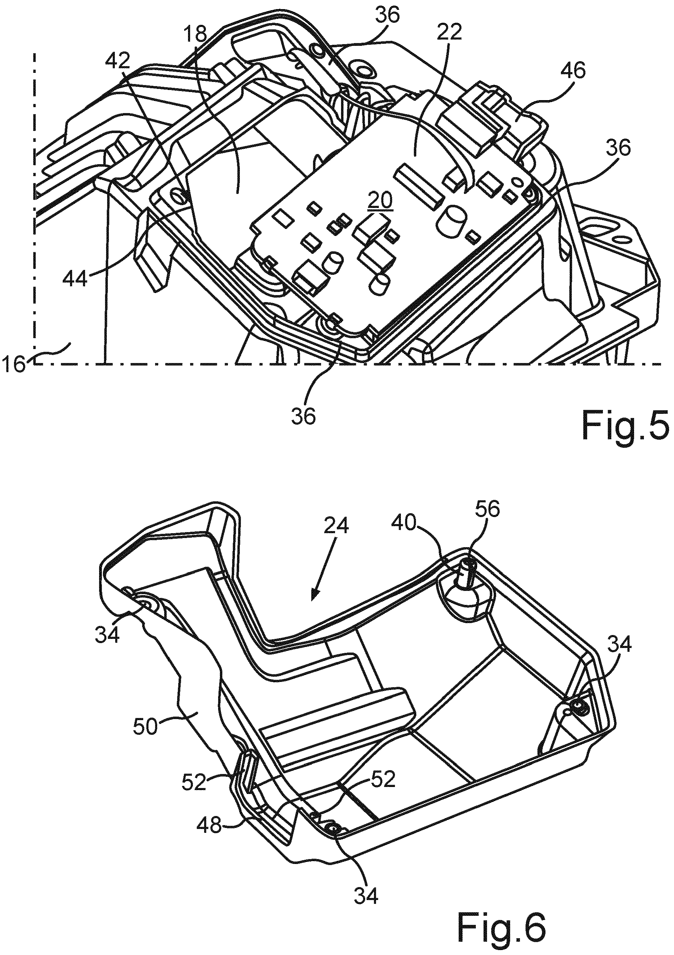

Aus einer Zusammenschau insbesondere von Fig. 4 mit Fig. 6 ist ersichtlich, dass in dem Deckelelement 24 für diese drei Schrauben 26 jeweilige Durchtrittsöffnungen 34 ausgebildet sind, welche in jeweiligen Eckbereichen des Deckelelements 24 angeordnet sind. Gemäß Fig. 5 und Fig. 6 fluchten diese in dem Deckelelement 24 ausgebildeten Durchtrittsöffnungen 34 mit weiteren Durchtrittsöffnungen 36, welche in dem vorliegend durch das Druckgussgehäuse bereitgestellten Gehäuseteil 16 ausgebildet sind.

In einem Eckbereich 38 des weiteren Bauteils 28 (vergleiche Fig. 3) ist jedoch das weitere Bauteil 28 zu weit von dem Deckelelement 24 beabstandet, um eine Verbindung des Deckelelements 24 mit dem weiteren Bauteil 28 mittels der in Fig. 3 gezeigten vierten Schraube 26 realisieren zu können. Wie insbesondere aus einer Zusammenschau von Fig. 4 mit Fig. 6 hervorgeht, weist das Deckelelement 24 in diesem Eckbereich 38 anstelle der Durchtrittsöffnungen 34 ein Zapfenelement 40 auf.

Das nach Art eines Dübels oder Spreizdübels ausgebildete Zapfenelement 40 wird beim Fertigen der Anzeigevorrichtung 10 und zwar konkret beim Montieren des Deckelelements 24 an das Gehäuseteil 16 in eine vorliegend als Bohrung ausgebildete Aufnahme 42 eingebracht, welche in dem Gehäuseteil 16 ausgebildet ist (vergleiche insbesondere Fig. 5).

Nachdem das Zapfenelement 40 mit Spiel in die im Ausführungsbeispiel als Bohrung ausgebildete Aufnahme 42 eingebracht wurde, wird die vierte Schraube 26 von einer der Umgebung der Anzeigevorrichtung 10 zugewandten Außenseite des Deckelelements 24 her in das Zapfenelement 40 eingeschraubt. Demgegenüber ist in Fig. 6 das Deckelelement 24 in einer Ansicht auf seine Innenseite gezeigt, wobei die Innenseite des Deckelelements 24 im montierten Zustand der Anzeigevorrichtung 10 (vergleiche Fig. 1) dem Gehäuseteil 16 zugewandt ist.

Die (vorliegend vierte) Schraube 26 wirkt bei dem Einschrauben in das Zapfenelement 40 als Spreizkörper und führt zu einem Aufweiten des Zapfenelements 40. Insbesondere werden zwei durch einen Schlitz zumindest bereichsweise voneinander getrennte Teilbereiche des Zapfenelements 40 hierbei voneinander weg bewegt. Dies bewirkt wiederum, dass das Zapfenelement 40 mit einer Wandung 44 verspannt wird, welche die Aufnahme 42 in Umfangsrichtung begrenzt (vergleiche Fig. 5). In Fig. 6 ist zu erkennen, dass in dem noch nicht aufgespreizten Zustand des Zapfenelements 40 die Teilbereiche oder Teilstücke des Zapfenelements 40 an einem freien Ende 56 des Zapfenelements 40 noch miteinander verbunden sein können.

Aufgrund des Aufweitens des Zapfenelements 40 ist vorliegend das Zapfenelement 40 in der Aufnahme 42 fixiert. Vorzugsweise ist das Zapfenelement 40 infolge des Einbringens der als Spreizkörper wirkenden Schraube 26 in das Zapfenelement 40 spielfrei in die Aufnahme 42 aufgenommen.

In vorteilhafter Weise können die vorliegend als Gleichteile ausgebildeten Schrauben 26 in Form der selbstschneidenden Kunststoffschrauben für eine kostengünstige Fixierung des als Abdeckung dienenden Deckelelements 24 an dem Gehäuseteil 16 verwendet werden. Zum Festlegen des Deckelelements 24 an dem Gehäuseteil 16 beziehungsweise zum Verbinden des Deckelelements 24 mit dem Gehäuseteil 16 werden hierbei einige, vorliegend beispielhaft drei, der Schrauben 26 durch das Gehäuseteil 16 beziehungsweise Druckgussgehäuse hindurch in die optische Kammer in Form des weiteren Bauteils 28 eingeschraubt. Und die vorliegend vierte Schraube 26 wird als der Spreizkörper verwendet.

Des Weiteren ist durch das Zapfenelement 40 eine präzise Geometrie zum Ausrichten des Deckelelements 24 relativ zu dem Druckgussgehäuse beziehungsweise Gehäuseteil 16 bereitgestellt. Das Zapfenelement 40 dient daher vorliegend als Zentrierzapfen und zugleich als Dübel beziehungsweise Spreizdübel für eine präzise Positionierung und Fixierung des Deckelelements 24 an dem Gehäuseteil 16.

Vorzugsweise wird bei dem Fertigen der Anzeigevorrichtung 10 beziehungsweise bei der Montage der Anzeigevorrichtung 10 zunächst das Zapfenelement 40 mit einer Spielpassung in die Aufnahme 42 eingebracht. Wenn dann die als Spreizkörper dienende Schraube 26 von der Umgebung der Anzeigevorrichtung 10 her in das Zapfenelement 40 eingebracht beziehungsweise eingeschraubt wird, so führt das damit einhergehende Aufweiten des Zapfenelements 40 zu einer, vorzugsweise spielfreien, Zentrierung des Zapfenelements 40 in der Aufnahme 42. Anschließend werden die weiteren Schrauben 26 in die zugehörigen Befestigungsdome 32 eingeschraubt, welche an dem weiteren Bauteil 28 bereitgestellt sind (vergleiche Fig. 3).

Aus Fig. 1 ist ersichtlich, dass im montierten Zustand der Anzeigevorrichtung 10 ein als elektrische Anschlusseinrichtung dienender Stecker 46 der Anzeigevorrichtung 10 von der Umgebung der Anzeigevorrichtung 10 her zugänglich ist.

Wie insbesondere aus einer Zusammenschau von Fig. 1 mit Fig. 6 ersichtlich ist, liegt dieser Stecker 46 im Bereich einer U-förmigen Aussparung 48, welche in einer Seitenwand 50 des vorliegend haubenförmigen Deckelelements 24 ausgebildet ist. Indem der Stecker 46 beim Montieren des Deckelelements 24 im Bereich dieser Aussparung 48 angeordnet wird, ist ein verdrehsichere Ausrichtung des Deckelelements 24 bezogen auf das Gehäuseteil 16 sichergestellt, wenn das Zapfenelement 40 in die Aufnahme 42 eingebracht oder eingeführt wird.

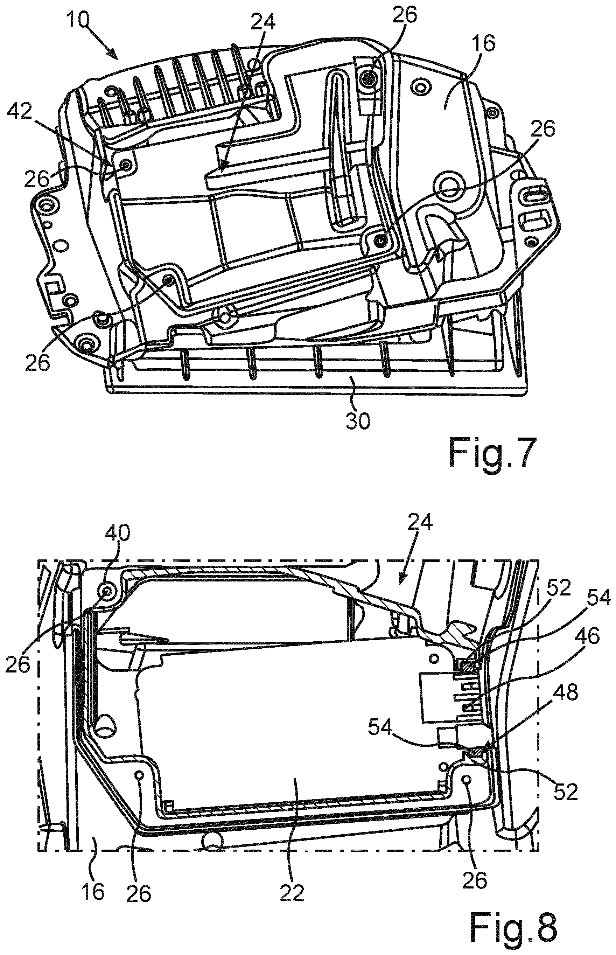

In Fig. 7 ist die Anzeigevorrichtung 10 in einer weiteren Ansicht auf ihre Unterseite gezeigt, an welcher das Deckelelement 24 mit dem Gehäuseteil 16 verbunden ist. Hier ist sowohl die Schraube 26 zu erkennen, welches zum Aufweiten des Zapfenelements 40 im Bereich der Aufnahme 42 eingeschraubt wurde, als auch die weiteren drei Schrauben 26, welche in die Befestigungsdome 32 des weiteren Bauteils 28 (vergleiche Fig. 3) eingeschraubt sind.

Aus der in Fig. 8 gezeigten, teilweise geschnittenen Darstellung des Deckelelements 24 mit der darunter liegenden Leiterplatte 22 ist insbesondere die Anordnung des Deckelelements 24 relativ zu dem Stecker 46 gut zu erkennen, welcher auf der Leiterplatte 22 angeordnet ist. Demgemäß ist an dem Deckelelement 24 im Bereich der Aussparung 48 eine Haltenut 52 ausgebildet, welche ein Dichtelement 54 bereichsweise umgreift. Mit anderen Worten ist das Dichtelement 54 bereichsweise in der Haltenut 52 aufgenommen, welche einstückig mit der Seitenwand 50 des Deckelelements 24 ausgebildet ist (vergleiche Fig. 6).

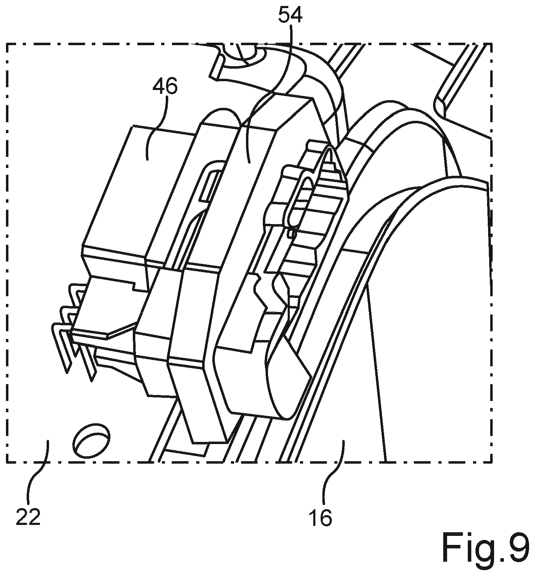

In Fig. 9 ist das Dichtelement 54 perspektivisch gezeigt, welches den Stecker 46 U-förmig umgreift. Beispielsweise kann das Dichtelement 54 nach Art eines Schaumkragens aus einem elastischen Schaummaterial gebildet sein. Auf diese Weise ist insbesondere eine Staubdichtheit der vorliegend als Head-up-Display ausgebildeten Anzeigevorrichtung 10 auch im Bereich des Steckers 46 sichergestellt, wenn das Deckelelement 24 mit dem Gehäuseteil 16 verbunden ist.

## Patentansprüche

1. Kopf-Oben-Anzeigevorrichtung (10) für ein Kraftfahrzeug, mit einem Gehäuseteil (16), in welchem eine Bilderzeugungseinheit (14) der Anzeigevorrichtung (10) angeordnet ist, wobei die Bilderzeugungseinheit (14) zum Projizieren eines Bilds auf eine lichtdurchlässige Projektionsfläche ausgebildet ist, und mit einem Deckelelement (24), welches mit dem Gehäuseteil (16) verbunden ist und welches das Gehäuseteil (16) zu einer Umgebung der Anzeigevorrichtung (10) hin bereichsweise abdeckt, wobei das Deckelelement (24) ein Zapfenelement (40) aufweist, welches in eine korrespondierende, in dem Gehäuseteil (16) ausgebildete Aufnahme (42) eingebracht ist,
**dadurch gekennzeichnet, dass**
das Zapfenelement (40) mittels eines in das Zapfenelement (40) eingebrachten Spreizkörpers (26) aufgeweitet ist, wobei das Zapfenelement (40) aufgrund des Aufweitens in der Aufnahme (42) fixiert ist.

2. Kopf-Oben-Anzeigevorrichtung nach Anspruch 1,
**dadurch gekennzeichnet, dass**
das Zapfenelement (40) aufgrund des Aufweitens mit einer die, insbesondere als Bohrung ausgebildeten, Aufnahme (42) begrenzenden Wandung (44) verspannt ist.

3. Kopf-Oben-Anzeigevorrichtung nach Anspruch 1 oder 2,
**dadurch gekennzeichnet, dass**
das Deckelelement (24) mittels wenigstens eines weiteren, von dem Zapfenelement (40) verschiedenen Befestigungsmittels (26) mit dem Gehäuseteil (16) verbunden ist.

4. Kopf-Oben-Anzeigevorrichtung nach Anspruch 3,
**dadurch gekennzeichnet, dass**
das wenigstens eine weitere Befestigungsmittel (26) durch eine in dem Gehäuseteil (16) ausgebildete Durchtrittsöffnung (36) hindurchgeführt und an einem weiteren Bauteil (28) der Anzeigevorrichtung (10) festgelegt ist.

5. Kopf-Oben-Anzeigevorrichtung nach Anspruch 4,
**dadurch gekennzeichnet, dass**
das weitere Bauteil (28) wenigstens einen Befestigungsdom (32) aufweist, in welchen das weitere Befestigungsmittel (26) eingebracht ist.

6. Kopf-Oben-Anzeigevorrichtung nach Anspruch 4 oder 5,
**dadurch gekennzeichnet, dass**
das weitere Bauteil (28) aus einem anderen Werkstoff, insbesondere aus einem Kunststoff, gebildet ist als das, insbesondere aus Metall gebildete, Gehäuseteil (16).

7. Kopf-Oben-Anzeigevorrichtung nach einem der Ansprüche 4 bis 6,
**dadurch gekennzeichnet, dass**
das weitere Bauteil (28) als Abschirmeinrichtung ausgebildet ist, mittels welcher eine Beaufschlagung wenigstens einer Komponente der Bilderzeugungseinheit (14) mit Streulicht zumindest verringerbar ist.

8. Kopf-Oben-Anzeigevorrichtung nach einem der Ansprüche 3 bis 7,
**dadurch gekennzeichnet, dass**
der Spreizkörper und/oder das wenigstens eine weitere Befestigungsmittel als Schraube (26), insbesondere als aus einem Kunststoff gebildete und/oder als selbstschneidende Schraube (26), ausgebildet ist.

9. Kopf-Oben-Anzeigevorrichtung nach einem der Ansprüche 3 bis 8,
**dadurch gekennzeichnet, dass**
das, insbesondere einstückig mit einem Grundkörper des Deckelelements (24) ausgebildete, Zapfenelement (40) und das wenigstens eine weitere Befestigungsmittel (26) in jeweiligen Eckbereichen des Deckelelements (24) angeordnet sind.

10. Kopf-Oben-Anzeigevorrichtung nach einem der Ansprüche 1 bis 9,
**dadurch gekennzeichnet, dass**
in einer Seitenwand (50) des Deckelelements (24) eine Aussparung (48) ausgebildet ist, über welche eine elektrische Anschlusseinrichtung (46) der Anzeigevorrichtung (10) von der Umgebung der Anzeigevorrichtung (10) her zugänglich ist, wobei die Seitenwand (50) im Bereich der Aussparung (48) gegenüber der elektrischen Anschlusseinrichtung (46) mittels eines Dichtelements (54) abgedichtet ist.

11. Kopf-Oben-Anzeigevorrichtung nach Anspruch 10,
**dadurch gekennzeichnet, dass**
die Seitenwand (50) im Bereich der Aussparung (48) eine Haltenut (52) aufweist, welche das, insbesondere aus einem elastischen Schaummaterial gebildete, Dichtelement (54) bereichsweise umgreift.

12. Verfahren zum Fertigen einer Kopf-Oben-Anzeigevorrichtung (10) für ein Kraftfahrzeug, bei welchem ein Gehäuseteil (16), in welchem eine zum Projizieren eines Bilds auf eine lichtdurchlässige Projektionsfläche ausgebildete Bilderzeugungseinheit (14) der Anzeigevorrichtung (10) angeordnet ist, mit einem Deckelelement (24) der Anzeigevorrichtung (10) verbunden wird, welches das Gehäuseteil (16) zu einer Umgebung der Anzeigevorrichtung (10) hin bereichsweise abdeckt, wobei das Deckelelement (24) ein Zapfenelement (40) aufweist, welches in eine korrespondierende, in dem Gehäuseteil (16) ausgebildete Aufnahme (42) eingebracht wird,
**dadurch gekennzeichnet, dass**
das Zapfenelement (40) mittels eines in das Zapfenelement (40) eingebrachten Spreizkörpers (26) aufgeweitet wird, wobei das Zapfenelement (40) aufgrund des Aufweitens in der Aufnahme (42) fixiert wird.

## Claims

1. Head-up display device (10) for a motor vehicle, having a housing part (16), in which an image-generating unit (14) of the display device (10) is arranged, wherein the image-generating unit (14) is designed to project an image onto a light-permeable projection surface, and having a cover element (24), which is connected to the housing part (16) and covers regions of the housing part (16) with respect to the surroundings of the display device (10), wherein the cover element (24) has a peg element (40), which is inserted into a corresponding receptacle (42) formed in the housing part (16),
**characterized in that**
the peg element (40) is expanded by means of a spreading piece (26) inserted into the peg element (40), wherein the peg element (40) is fixed in the receptacle (42) as a result of the expansion.

2. Head-up display device according to Claim 1,
**characterized in that**
as a result of the expansion, the peg element (40) is braced against a wall (44) that delimits the receptacle (42), which is in particular designed as a drilled hole.

3. Head-up display device according to Claim 1 or 2,
**characterized in that**
the cover element (24) is connected to the housing part (16) by means of at least one further fastening means (26), which is different from the peg element (40).

4. Head-up display device according to Claim 3,
**characterized in that**
the at least one further fastening means (26) is fed through a through-opening (36) formed in the housing part (16) and is fixed to a further component part (28) of the display device (10).

5. Head-up display device according to Claim 4,
**characterized in that**
the further component part (28) has at least one fastening dome (32), into which the further fastening means (26) is inserted.

6. Head-up display device according to Claim 4 or 5,
**characterized in that**
the further component part (28) is formed from a different material, in particular a plastic, than the housing part (16), which is in particular formed from metal.

7. Head-up display device according to one of Claims 4 to 6,
**characterized in that**
the further component part (28) is designed as a shielding device, by means of which an exposure of at least one component of the image-generating unit (14) to scattered light can be at least reduced.

8. Head-up display device according to one of Claims 3 to 7,
**characterized in that**
the spreading piece and/or the at least one further fastening means is designed as a screw (26), in particular as a screw (26) that is formed from a plastic and/or is self-cutting.

9. Head-up display device according to one of Claims 3 to 8,
**characterized in that**
the peg element (40), which is in particular formed integrally with a main body of the cover element (24), and the at least one further fastening means (26) are arranged in respective corner regions of the cover element (24).

10. Head-up display device according to one of Claims 1 to 9,
**characterized in that**
a cut-out (48) is formed in a side wall (50) of the cover element (24), via which cut-out an electrical connection device (46) of the display device (10) is accessible from the surroundings of the display device (10), wherein the side wall (50) is sealed off from the electrical connection device (46) in the region of the cut-out (48) by means of a sealing element (54).

11. Head-up display device according to Claim 10,
**characterized in that**
the side wall (50) has, in the region of the cut-out (48), a retaining groove (52), which fits around regions of the sealing element (54), which is in particular formed from an elastic foam material.

12. Method for producing a head-up display device (10) for a motor vehicle, in which method a housing part (16), in which an image-generating unit (14) of the display device (10) is arranged, the image-generating unit being designed to project an image onto a light-permeable projection surface, is connected to a cover element (24) of the display device (10), the cover element covering regions of the housing part (16) with respect to the surroundings of the display device (10), wherein the cover element (24) has a peg element (40), which is inserted into a corresponding receptacle (42) formed in the housing part (16),
**characterized in that**
the peg element (40) is expanded by means of a spreading piece (26) inserted into the peg element (40), wherein the peg element (40) is fixed in the receptacle (42) as a result of the expansion.

## Revendications

1. Dispositif d'affichage tête haute (10) pour un véhicule à moteur, comprenant une partie de boîtier (16) dans laquelle est disposée une unité de génération d'images (14) du dispositif d'affichage (10), l'unité de génération d'images (14) étant conçue pour projeter une image sur une surface de projection translucide, et comprenant un élément de couvercle (24) qui est relié à la partie de boîtier (16) et qui recouvre partiellement la partie de boîtier (16) par rapport à un environnement du dispositif d'affichage (10), l'élément de couvercle (24) comportant un élément de cheville (40) qui est inséré dans un logement (42) correspondant formé dans la partie de boîtier (16),
**caractérisé en ce que**
l'élément de cheville (40) est dilaté au moyen d'un corps d'écartement (26) inséré dans l'élément de cheville (40), la dilatation ayant pour effet que l'élément de cheville (40) est fixé dans le logement (42).

2. Dispositif d'affichage tête en haut selon la revendication 1,
**caractérisé en ce que**
l'élément de cheville (40) est serré, en raison de la dilatation, avec une paroi (44) délimitant le logement (42), qui est notamment réalisé sous la forme d'un alésage.

3. Dispositif d'affichage tête en haut selon la revendication 1 ou 2,
**caractérisé en ce que**
l'élément de couvercle (24) est relié à la partie de boîtier (16) au moyen d'au moins un autre moyen de fixation (26) différent de l'élément de cheville (40).

4. Dispositif d'affichage tête en haut selon la revendication 3,
**caractérisé en ce que**
l'au moins un autre moyen de fixation (26) passe à travers une ouverture de passage (36) ménagée dans la partie de boîtier (16) et est fixé à un autre composant (28) du dispositif d'affichage (10).

5. Dispositif d'affichage tête en haut selon la revendication 4,
**caractérisé en ce que**
l'autre composant (28) comporte au moins un dôme de fixation (32) dans lequel est inséré l'autre moyen de fixation (26).

6. Dispositif d'affichage tête en haut selon la revendication 4 ou 5,
**caractérisé en ce que**
l'autre composant (28) est formé d'un matériau, notamment d'une matière plastique, différent de celui de la partie de boîtier (16), notamment constituée de métal.

7. Dispositif d'affichage tête haute selon l'une quelconque des revendications 4 à 6,
**caractérisé en ce que**
l'autre composant (28) est réalisé sous la forme d'un dispositif de masquage, au moyen duquel une incidence de lumière parasite sur au moins un composant de l'unité de formation d'image (14) peut être au moins réduite.

8. Dispositif d'affichage tête haute selon l'une quelconque des revendications 3 à 7,
**caractérisé en ce que**
le corps de dilatation et/ou l'au moins un autre moyen de fixation est réalisé sous forme de vis (26), notamment sous forme de vis (26) formée d'une matière plastique et/ou autotaraudeuse.

9. Dispositif d'affichage tête haute selon l'une quelconque des revendications 3 à 8,
**caractérisé en ce que**
l'élément de cheville (40), notamment réalisé d'un seul tenant avec un corps de base de l'élément de couvercle (24), et l'au moins un autre moyen de fixation (26) sont disposés dans des régions d'angle respectives de l'élément de couvercle (24).

10. Dispositif d'affichage tête haute selon l'une quelconque des revendications 1 à 9,
**caractérisé en ce que**
dans une paroi latérale (50) de l'élément de couvercle (24), est formé un évidement (48) par l'intermédiaire duquel un dispositif de raccordement électrique (46) du dispositif d'affichage (10) est accessible depuis l'environnement du dispositif d'affichage (10), la paroi latérale (50) étant rendue étanche au moyen d'un élément d'étanchéité (54) dans la région de l'évidement (48) par rapport au dispositif de raccordement électrique (46).

11. Dispositif d'affichage tête en haut selon la revendication 10,
**caractérisé en ce que**
la paroi latérale (50) présente, dans la région de l'évidement (48), une rainure de maintien (52) qui entoure par endroits l'élément d'étanchéité (54) formé en particulier d'un matériau en mousse élastique.

12. Procédé de fabrication d'un dispositif d'affichage tête haute (10) pour un véhicule à moteur, selon lequel une partie de boîtier (16) dans laquelle est disposée une unité de génération d'images (14) du dispositif d'affichage (10) conçue pour projeter une image sur une surface de projection translucide, est reliée à un élément de couvercle (24) du dispositif d'affichage (10), lequel recouvre partiellement la partie de boîtier (16) par rapport à un environnement du dispositif d'affichage (10), l'élément de couvercle (24) comportant un élément de cheville (40) qui est inséré dans un logement (42) correspondant formé dans la partie de boîtier (16),
**caractérisé en ce que**
l'élément de cheville (40) est dilaté au moyen d'un corps d'écartement (26) inséré dans l'élément de cheville (40), la dilatation ayant pour effet que l'élément de cheville (40) est fixé dans le logement (42).
